# EUROPÄISCHE PATENTSCHRIFT

(11) **EP 3 109 445 B1**
(45) Veröffentlichungstag und Bekanntmachung des Hinweises auf die Patenterteilung: **06.02.2019**
(21) Anmeldenummer: 16173222.7
(22) Anmeldetag: 07.06.2016
(51) Int. Cl.: F02D 41/00, F02B 37/12, F02B 37/22

(54) **VERFAHREN ZUM BETREIBEN EINER BRENNKRAFTMASCHINE UND BRENNKRAFTMASCHINE**
COMBUSTION ENGINE AND METHOD FOR OPERATING A COMBUSTION ENGINE
PROCÉDÉ DE FONCTIONNEMENT D'UN MOTEUR À COMBUSTION INTERNE ET MOTEUR À COMBUSTION INTERNE

(30) Priorität: 25.06.2015 DE 102015211868
(43) Veröffentlichungstag der Anmeldung: 28.12.2016
(73) Patentinhaber: Volkswagen Aktiengesellschaft, 38440 Wolfsburg (DE)
(72) Erfinder: Bumel, Sebastian, 38486 Klötze (DE); Kellner, Stephan, 38440 Wolfsburg (DE)

(56) Entgegenhaltungen:
- EP-A2- 1 336 737
- WO-A1-2008/015397
- WO-A2-2007/000551
- US-A1- 2015 047 342

## Beschreibung

Die Erfindung betrifft ein Verfahren zum Betreiben einer Brennkraftmaschine, die einen Dieselmotor und einen Frischgasstrang, über den dem Dieselmotor Frischgas zuführbar ist, umfasst, wobei ein Verdichter und zwischen dem Dieselmotor und dem Verdichter eine Regelklappe in den Frischgasstrang integriert sind. Die Erfindung betrifft weiterhin eine solche Brennkraftmaschine.

Die Verwendung eines oder mehrerer Verdichter zur Erhöhung der spezifischen Leistung und zur Senkung des spezifischen Kraftstoffverbrauchs von Brennkraftmaschinen ist bekannt. Die Verdichter sind dabei zumeist als Teil von Abgasturboladern ausgebildet.

Verdichter für PKW-Anwendungen werden üblicherweise als Turboverdichter ausgeführt, da mit diesen im Vergleich zu Verdrängerverdichtern hohe Volumenströme gefördert werden können und die mit diesen erzeugbaren, vergleichsweise geringen Verdichtungsenddrücke für die meisten PKW-Anwendungen ausreichend sind. Als Turboverdichter weisen diese ein Verdichterlaufrad auf, das innerhalb eines von einem Verdichtergehäuse ausgebildeten Strömungsraums angeordnet ist, wodurch der Strömungsraum in einen stromauf des Verdichterlaufrads gelegenen Niederdruckraum und einen stromab des Verdichterlaufrads gelegenen Hochdruckraum unterteilt wird.

Ein Problem, das sich aus der Ausgestaltung eines Verdichters in Form eines Turboverdichters ergeben kann, ist die Rückströmung von bereits verdichtetem Frischgas infolge der nur unvollständigen Separierung des Hochdruck- und des Niederdruckraums voneinander. Dies kann sich bei einer Ausgestaltung des Verbrennungsmotors der Brennkraftmaschine als Dieselmotor insbesondere dann als problematisch zeigen, wenn sich auf der Hochdruckseite des Frischgasstrangs, der sogenannten Ladeluftstrecke, temporär ein vergleichsweise großer Überdruck einstellt, wie dies beispielsweise der Fall sein kann, wenn der Betrieb des Dieselmotors ausgehend von einem Betriebszustand mit hoher Last plötzlich in einen Betriebszustand mit niedriger Last oder ohne Last (Schiebebetrieb) übergeht, wie dies der Fall sein kann, wenn das Gaspedal plötzlich vollständig entlastet wird. Eine solche plötzliche Lastwegnahme kann dazu führen, dass eine Verringerung des relativ hohen Drucks in der Ladeluftstrecke, der sich infolge eines vorausgegangenen Betriebs des Dieselmotors mit hoher Last eingestellt hat, deutlich langsamer erfolgt als die Verringerung der Verdichtungsleistung. Es kann dann ein Betriebsbereich des Verdichters durchfahren werden, bei dem die erzeugte Verdichtungsleistung nicht mehr ausreicht, um eine Rückströmung von bereits verdichtetem Frischgas von der Hochdruck- auf die Niederdruckseite in ausreichendem Maße zu verhindern.

Eine solche Rückströmung von Frischgas kann sich wellenförmig ausbreiten, was zu einer entsprechenden Schwingungsanregung des Verdichtergehäuses und insbesondere eines an einen Verdichtereinlass angeschlossenen Gasführungsrohrs des Frischgasstrangs führen kann. Diese Geräuschentwicklung, die aus einer Schwingungsanregung infolge einer plötzlichen Lastrücknahme bei einem Dieselmotor resultiert, wird vielfach auch als "Kaudern" bezeichnet.

Ein solches Kaudern kann bei einem Verdichter, der Teil eines Abgasturboladers mit einer variablen Turbinengeometrie (VTG) ist, die auf einer Vorrichtung zur Veränderung der Turbinenanströmung beruht, dadurch verringert oder vermieden werden, dass möglichst gleichzeitig mit der Lastrücknahme die VTG möglichst weit geöffnet wird, was mit einer schnellen Verringerung der Turbinenleistung und damit auch der Verdichtungsleistung einhergeht. Nachteilig an diesem Vorgehen ist jedoch, dass dadurch bei einer sich an die Lastrücknahme kurzfristig anschließenden relativ schnellen und starken Lasterhöhung, wie es beispielsweise in Verbindung mit Schaltvorgängen eines Schaltgetriebes charakteristisch ist, ein entsprechend hoher Ladedruck nur verzögert wieder zur Verfügung steht. Dies kann von einem Fahrer eines mit einer solchen Brennkraftmaschine zur Erzeugung der Fahrantriebsleistung ausgestatteten Kraftfahrzeugs als mangelnde Fahrdynamik ausgelegt werden.

Bei einer Brennkraftmaschine mit einer Hochdruckabgasrückführung (Hochdruck-AGR), bei der eine mittels eines AGR-Ventils steuerbare Verbindungsleitung zwischen einem Abschnitt des Abgasstrangs stromauf der Turbine und einem Abschnitt des Frischgasstrangs stromab des Verdichters vorgesehen ist, kann ein Kaudern auch dadurch verringert oder vermieden werden, dass möglichst gleichzeitig mit der Lastrücknahme das AGR-Ventil geöffnet wird, um eine Druckabnahme in der Ladeluftstrecke durch ein Überströmen von Frischgas über die Hochdruck-AGR-Verbindungsleitung aus dem Frischgasstrang in den Abgasstrang zu unterstützen.

Die DE 10 2008 015 855 A1 offenbart, zur Vermeidung der Überschreitung der Pumpgrenze eines Verdichters eines Abgasturboladers bei einem Übergang von einem Hochlastbetrieb in eine Teillast- oder den Schiebebetrieb für einen Ottomotor ein Wastegate der Turbine des Abgasturboladers zu öffnen. Zudem ist vorgesehen, bei Übergängen, die in einem Drehzahlbereich von 2000 Umdrehungen pro Minute und mehr erfolgen, die Drosselklappe, anders als bei Ottomotoren üblich, zunächst zumindest ein Stück weit geöffnet zu halten und diese verlangsamt zu schließen. Auf diese Weise könne auf ein Schubumluftventil, das dazu dient, von dem Verdichter gefördertes Frischgas wieder auf die Niederdruckseite zurückzuführen, um einen Druckstau infolge einer (vollständig) geschlossenen Drosselklappe zu vermeiden, verzichtet werden. Ein dazu ähnliches Verfahren ist auch aus der DE 10 2010 021 449 A1 bekannt.

Ein Dieselmotor weist im Unterschied zu einem Ottomotor keine Drosselklappe, jedoch ein an vergleichbarer Position in den Frischgasstrang integriertes und konstruktiv ähnliches Klappenventil auf, das häufig als "Regelklappe" bezeichnet wird. Anders als eine Drosselklappe bei einem Ottomotor dient eine solche Regelklappe bei einem Dieselmotor jedoch nicht einer Regelung der dem Verbrennungsmotor zugeführten Frischgasmenge sondern primär dem Verschließen des Frischgasstrangs unmittelbar nach einem Beenden des Betriebs, so dass durch eine Unterbrechung der Frischgaszufuhr ein ungewolltes Nachlaufen des selbstzündenden Dieselmotors vermieden werden kann. Während des Betriebs verbleibt die Regelklappe dagegen zumeist ungenutzt, wozu diese in ihrer vollständig geöffneten Stellung, in der diese den entsprechenden Abschnitt des Frischgasstrangs weitestgehend freigibt und einen geringstmöglichen Strömungswiderstand darstellt, gehalten wird.

Die US 2015/047342 A1 offenbart ein Verfahren zur Reduzierung einer Überkompression ("surge") bei einem Verdichter einer Brennkraftmaschine, die daraus resultiert, dass ein Fahrpedal eines die Brennkraftmaschine umfassenden Kraftfahrzeugs entlastet wird, was mit dem Schließen einer Drosselklappe verbunden ist, wodurch bereits verdichtetes Frischgas von der Hochdruckseite des Verdichters zu der Niederdruckseite rückströmen kann. Die sich daraus potenziell ergebenden Probleme hinsichtlich einer ungewollten Geräuschentwicklung können durch die Integration eines Rückströmkanals mit darin integriertem Ventil vermieden werden. Die US 2015/047342 A1 beschreibt weiterhin ein Ausführungsbeispiel für ein entsprechendes Verfahren basierend auf einer Brennkraftmaschine, die eine Drosselklappe umfasst. Der Verbrennungsmotor 10 dieser Brennkraftmaschine soll in einem "compression ignition mode" betrieben werden können. Dabei soll die Zündung entweder mit oder ohne Zündfunken bewirkt werden können. Für das Ausführungsbeispiel sind jedoch explizit Zündkerzen vorgesehen.

Die EP 1 336 737 A2 betrifft ein "supercharge pressure control apparatus" für eine Brennkraftmaschine. Bei einem in der EP 1 336 737 A2 beschriebenen Ausgestaltungsbeispiel für einen solchen "supercharge pressure control apparatus" ist der damit zusammenwirkende Verbrennungsmotor als direkt einspritzender Benzinmotor ausgebildet, wobei auch erwähnt ist, dass ein solches Ausgestaltungsbeispiel des "supercharge pressure control apparatus" auch bei einem Dieselmotor zur Anwendung kommen kann.

Die WO2008/015397 A1 beschreibt eine mehrstufig aufgeladene Brennkraftmaschine mit einem Dieselmotor (vgl. Seite 9, letzter Absatz). Das Aufladesystem der Brennkraftmaschine kann in zwei besonderen Betriebsarten, nämlich einem Motorbremsbetrieb und einem Abgasaufheizbetrieb betrieben werden. Anschließend wird beschrieben, dass ein solcher Motorbremsbetrieb für Brennkraftmaschinensysteme von Kraftfahrzeugen allgemein bekannt ist, wobei gemäß einer Art eines solchen Motorbremsbetriebs vorgesehen sein kann, dass die Motorbremse automatisch aktiviert wird, wenn der Verbrennungsmotor gedrosselt wird ("when the engine throttle is closed (i.e. when the driver lifts his foot from the throttle pedal)").

Ausgehend von diesem Stand der Technik lag der Erfindung die Aufgabe zugrunde, ein Kaudern bei einer Brennkraftmaschine mit aufgeladenem Dieselmotor auf möglichst einfache Weise so gut wie möglich zu reduzieren.

Diese Aufgabe wird mittels eines Verfahrens zum Betreiben einer solchen Brennkraftmaschine gemäß dem Patentanspruch 1 gelöst. Eine solche Brennkraftmaschine mit einer zur Durchführung eines erfindungsgemäßen Verfahrens ausgebildeten Steuervorrichtung ist Gegenstand des Patentanspruchs 7. Vorteilhafte Ausführungsformen des erfindungsgemäßen Verfahrens und damit vorteilhafte Ausgestaltungen der erfindungsgemäßen Brennkraftmaschine sind Gegenstände der weiteren Patentansprüche und ergeben sich aus der nachfolgenden Beschreibung der Erfindung.

Der Erfindung liegt der Gedanke zugrunde, bei einem aufgeladenen Dieselmotor die Regelklappe zu nutzen, um bei einer plötzlichen Lastrücknahme den Strömungswiderstand für eine Rückströmung des Frischgases in der Ladeluftstrecke zu erhöhen, wodurch eine solche Rückströmung verringert oder zumindest verzögert werden kann. Dadurch kann die als "Kaudern" bekannte Geräuschentwicklung infolge einer Schwingungsanregung von Komponenten des Frischgasstrangs auf der Niederdruckseite des Verdichters ebenfalls verringert oder weitgehend vermieden werden.

Dementsprechend ist bei einem Verfahren zum Betreiben einer Brennkraftmaschine, die einen Dieselmotor, d.h. einen nach dem Diesel-Prinzip betreibbaren Verbrennungsmotor, und einen Frischgasstrang, über den dem Dieselmotor Frischgas zuführbar ist, umfasst, wobei ein Verdichter und zwischen dem Dieselmotor und dem Verdichter eine Regelklappe in den Frischgasstrang integriert sind, erfindungsgemäß vorgesehen, dass bei einem Übergang von einem ersten Betriebszustand des Dieselmotors mit relativ hoher Last zu einem zweiten Betriebszustand des Dieselmotors mit relativ niedriger Last oder mit Nulllast (Schiebebetrieb) die Regelklappe in eine zumindest teilweise geschlossene Stellung, bei einer bereits teilweise geschlossenen Stellung in eine weiter geschlossene Stellung und gegebenenfalls sogar in eine vollständig geschlossene Stellung gestellt wird.

Eine zumindest teilweise "geschlossene Stellung" der Regelklappe ist dabei dadurch gekennzeichnet, dass diese den Strömungsquerschnitt in demjenigen Abschnitt des Frischgasstrangs, in dem diese aufgenommen ist, im Vergleich zu einer (vollständig) geöffneten Stellung verkleinert.

Für eine möglichst wirkungsvolle Reduzierung des Kauderns sollte vorzugsweise vorgesehen sein, dass die Regelklappe um mindestens 50%, vorzugsweise um mindestens 60% und besonders bevorzugt um mindestens 70%, jeweils bezogen auf den (rotatorischen oder translatorischen) Gesamtschließweg, in eine geschlossene Stellung gestellt wird.

In Abhängigkeit von der konstruktiven Ausgestaltung der Brennkraftmaschine und insbesondere des Frischgasstrangs einschließlich des Verdichters tritt das möglichst zu vermeidende Kaudern insbesondere dann auf, wenn der relative Lastunterschied zwischen dem ersten Betriebszustand und dem zweiten Betriebszustand mindestens 10% (bezogen auf den drehzahlabhängigen Abstand zwischen der Schiebebetriebskurve und der Volllastkurve im dazugehörigen Motorkennfeld) beträgt. Dementsprechend ist vorteilhafterweise vorgesehen, ein erfindungsgemäßes Stellen der Regelklappe in eine zumindest teilweise geschlossene oder weiter geschlossene Stellung auch nur dann durchzuführen, wenn der Übergang von dem ersten Betriebszustand in den zweiten Betriebszustand zumindest diesen Lastunterschied umfasst. Nachvollziehbar kann ein möglichst zu vermeidendes Kaudern dann besonders groß sein, wenn der erste Betriebszustand durch Volllast und der zweite Betriebszustand durch Nulllast (Schiebebetrieb) gekennzeichnet ist.

Ein Auftreten von Kaudern ist weiterhin insbesondere davon abhängig, in welchem Übergangszeitraum der Übergang von dem ersten Betriebszustand zu dem zweiten Betriebszustand erfolgt. Je kürzer dieser Übergangszeitraum ist, d.h. je plötzlicher eine Lastreduzierung erfolgt, desto ausgeprägter kann ein Kaudern auftreten. Vorteilhafterweise ist daher zudem vorgesehen, dass ein erfindungsgemäßes Stellen der Regelklappe in eine zumindest teilweise geschlossene Stellung oder eine weiter geschlossene Stellung auch nur dann durchgeführt wird, wenn der Übergang von dem ersten Betriebszustand zu dem zweiten Betriebszustand innerhalb eines Zeitraums von 0,5 Sekunden, vorzugsweise von 0,1 Sekunden, erfolgt.

Gegebenenfalls kann es sinnvoll sein, das Verstellen der Regelklappe in eine mehr oder weniger geschlossene Stellung in Abhängigkeit von dem Lastunterschied zwischen dem ersten Betriebszustand und dem zweiten Betriebszustand und/oder in Abhängigkeit von dem Übergangszeitraum abhängig zu machen. Beispielsweise kann es sinnvoll sein, die Regelklappe in zunehmend geschlossenere Stellungen zu stellen, je größer der Lastunterschied und/oder je kürzer der Übergangszeitraum ist.

Das erfindungsgemäße Verfahren kann vorzugsweise bei einer Brennkraftmaschine, deren Verdichter Teil eines Abgasturboladers, ist, zur Anwendung kommen, da insbesondere bei einem Abgasturbolader eine Verzögerung zwischen einer Lastreduzierung im Betrieb des Dieselmotors und der entsprechenden Verringerung der aus der Beaufschlagung der Turbine mit dem aus diesem Betrieb ergebenden Abgas resultierenden Verdichtungsleistung relativ ausgeprägt sein kann. Ein erfindungsgemäßes Verfahren kann jedoch auch bei einer Brennkraftmaschine zur Anwendung kommen, die einen auf andere Weise angetriebenen Verdichter, beispielsweise einen mechanisch, d.h. von dem Dieselmotor selbst, angetriebenen Verdichter (vielfach als "Kompressor" bezeichnet) oder einen elektromotorisch angetriebenen Verdichter (vielfach als "Booster" bezeichnet), aufweist.

Sofern (wie vorzugsweise vorgesehen) bei einer Brennkraftmaschine mit einem Abgasturbolader zusätzlich eine Vorrichtung zur variablen Turbinenanströmung (VTG) umfasst ist, kann in einer bevorzugten Ausführungsform des erfindungsgemäßen Verfahrens vorgesehen sein, dass zumindest zeitweise gleichzeitig mit dem Verstellen der Regelklappe die Vorrichtung zur variablen Turbinenanströmung in ihrer Position gehalten oder in eine weiter (als zuvor) geöffnete Stellung gestellt wird. Dabei kann weiterhin bevorzugt vorgesehen sein, dass die Vorrichtung zur variablen Turbinenanströmung um maximal 20%, vorzugsweise um maximal 15% und besonders bevorzugt um ca. 10% bezogen auf die Gesamtöffnungsweite in eine weiter geöffnete Stellung gestellt wird. Es konnte festgestellt werden, dass durch eine Kombination der erfindungsgemäß primär vorgesehenen Maßnahme eines (teilweisen) Schließens der Regelklappe bei einer Lastrücknahme mit einem (geringfügigen) Öffnen der Vorrichtung zur variablen Turbinenanströmung ein Kaudern besonders gut reduziert werden kann, wobei bei einem nur geringfügigen Öffnen der Vorrichtung zur variablen Turbinenanströmung das aus dem Stand der Technik bekannte Problem eines verzögerten Druckaufbaus in der Ladeluftstrecke bei einer kurzfristig darauffolgenden Lastzunahme im Betrieb des Dieselmotors, die als schlechte Fahrdynamik interpretiert werden könnte, nicht im relevanten Maße gegeben ist.

Die "Gesamtöffnungsweite" ergibt sich erfindungsgemäß aus der Differenz der von der Vorrichtung zur variablen Turbinenanströmung größtmöglich und kleinstmöglich freigegebenen Strömungsquerschnitte.

Da bei gattungsgemäßen Brennkraftmaschinen, die zusätzlich eine Vorrichtung zur Ermöglichung einer Hochdruckabgasrückführung umfassen, die bereits beschriebene einfache Möglichkeit zur Reduzierung des Kaudern durch einen gezieltes Öffnen des AGR-Ventils zur Verfügung steht, kann ein erfindungsgemäßes Verfahren insbesondere bei einer Brennkraftmaschine zur Anwendung kommen, die eine solche Hochdruckabgasrückführungsvorrichtung nicht umfasst.

Die Erfindung betrifft weiterhin eine gattungsgemäße Brennkraftmaschine, die zudem eine Steuervorrichtung (Motorsteuerung) umfasst, die derart ausgebildet (und insbesondere derart softwaretechnisch programmiert) ist, dass diese (automatisch) ein erfindungsgemäßes Verfahren durchführt. Dazu können der Steuervorrichtung zumindest Informationen über den Lastzustand des Dieselmotors zuführbar sein. Weiterhin kann die Steuervorrichtung dazu zumindest die Regelklappe, vorzugsweise auch die Vorrichtung zur variablen Turbinenanströmung (soweit vorhanden), beziehungsweise jeweils einen dazugehörigen Aktor erfindungsgemäß ansteuern.

Eine solche Brennkraftmaschine kann insbesondere zur Verwendung in einem Kraftfahrzeug, insbesondere einem radbasierten Kraftfahrzeug (beispielsweise PKW oder LKW), vorgesehen sein. Dabei kann die Brennkraftmaschine insbesondere zu Erzeugung einer Fahrantriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: schematisch eine zur Verwendung im Rahmen eines erfindungsgemäßen Verfahrens verwendbare Brennkraftmaschine und
- Fig. 2:: in drei Diagrammen den zeitlichen Verlauf des Ladedrucks, der Stellung der Vorrichtung zur variablen Turbinenanströmung sowie der Stellung der Regelklappe der Brennkraftmaschine bei der Durchführung eines erfindungsgemäßen Verfahrens.

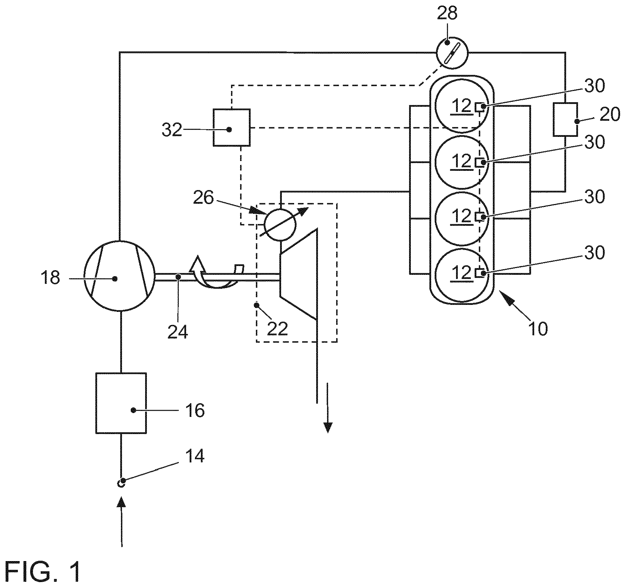

Die Fig. 1 zeigt in schematischer Darstellung eine zur Verwendung im Rahmen eines erfindungsgemäßen Verfahrens verwendbare Brennkraftmaschine mit einem Dieselmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas (Luft) gemeinsam mit Kraftstoff verbrannt wird. Der Kraftstoff wird dabei, gesteuert durch eine Steuervorrichtung 32 (Motorsteuerung), mittels Injektoren 30 direkt in die Brennräume eingespritzt. Das Verbrennen des Kraftstoff-Frischgas-Gemisches führt zu zyklischen auf und ab Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird. Das Frischgas wird dem Dieselmotor 10 über einen Frischgasstrang zugeführt und dazu über eine Ansaugmündung 14 aus der Umgebung angesaugt, in einem Luftfilter 16 gereinigt und anschließend in einen Verdichter 18, der Teil eines Abgasturboladers ist, geführt. Das Frischgas wird mittels des Verdichters 18 verdichtet, anschließend in einem Ladeluftkühler 20 abgekühlt und den Brennräumen zugeführt. Der Antrieb des Verdichters 18 erfolgt mittels einer Turbine 22 des Abgasturboladers, die in einen Abgasstrang der Brennkraftmaschine integriert ist. Abgas, das bei der Verbrennung des Kraftstoff-Frischgas-Gemisches in den Brennräumen des Dieselmotors 10 entsteht, wird über den Abgasstrang aus dem Dieselmotor 10 abgeführt und durchströmt dabei die Turbine 22. Dies führt in bekannter Weise zu einem rotierenden Antrieb eines Turbinenlaufrads, das wiederum über eine Welle 24 drehfest mit einem Verdichterlaufrad des Verdichters 18 verbunden ist. Der rotierende Antrieb des Turbinenlaufrads wird somit auf das Verdichterlaufrad übertragen.

Um im Betrieb des Dieselmotors 10 mit unterschiedlicher Last und unterschiedlichen Drehzahlen eine möglichst optimale Nutzung der Enthalpie des Abgases zur Erzeugung von Verdichtungsleistung mittels des Abgasturboladers realisieren zu können, umfasst die Turbine 22 des Abgasturboladers eine mittels der Steuervorrichtung 32 ansteuerbare Vorrichtung zur variablen Turbinenanströmung (VTG) 26. Diese kann in bekannter Weise eine Mehrzahl von in einem Einlass der Turbine 22 angeordnete Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlass der Turbine mehr oder weniger und beeinflussen zudem den Abschnitt der primären Anströmung des Turbinenlaufrads und die Ausrichtung dieser Anströmung.

Stromab des Verdichters 18 ist in die Ladeluftstrecke, d.h. den Abschnitt des Frischgasstrangs zwischen dem Verdichter 18 und dem Dieselmotor 10, eine ebenfalls mittels der Steuervorrichtung 32 ansteuerbare Regelklappe 28 integriert, deren primäre Funktion darin besteht, kurzfristig nach einem Beenden des Betriebs des Dieselmotors 10 die Ladeluftstrecke zu verschließen, wodurch ein Nachströmen von bereits verdichtetem Frischgas in die Brennräume des Dieselmotors 10 vermieden werden kann. Dadurch soll ein ungewolltes Nachlaufen des Dieselmotors 10 infolge von Selbstzündungen von Kraftstoffresten in den Brennräumen im Beisein von nachgeströmtem Frischgas verhindert werden.

Um ein Kaudern, d.h. eine Geräuscherzeugung infolge eines Rückströmens von bereits verdichtetem Frischgas von der Hochdruckseite zu der Niederdruckseite des Verdichters18 bei einer plötzlichen Lastreduzierung im Betrieb des Dieselmotors 10 möglichst zu vermeiden, ist im Rahmen eines erfindungsgemäßen Verfahrens vorgesehen, die Regelklappe 28 direkt, d.h. so kurz wie möglich nach einem an die Steuervorrichtung übermittelten (beispielsweise durch ein Entlasten eines Gaspedals durch einen Fahrer eines mit der Brennkraftmaschine ausgestatteten Kraftfahrzeugs) oder nach einem von der Steuervorrichtung selbst erzeugten Befehl zur Lastrücknahme, den die Steuervorrichtung 32 durch eine Reduzierung oder Unterbrechung der Kraftstoffzufuhr in die Brennräume mittels der Injektoren 30 umsetzt, zumindest teilweise zu schließen, wodurch ein Rückströmen von Frischgas aus der Ladeluftstrecke in den Verdichter 18 verringert werden kann.

Gleichzeitig mit einem zumindest teilweisen Schließen der Regelklappe 28 wird die Vorrichtung zur variablen Turbinenanströmung 26 hinsichtlich ihrer Stellung gehalten oder etwas weiter als zuvor geöffnet. Dies führt in bekannter Weise zu einer relativ schnellen Reduzierung des Ladedrucks, der eigentlich infolge der Trägheit des Abgasturboladers hinsichtlich der Fähigkeit, auf Laständerungen im Betrieb des Dieselmotors 10 zu reagieren, nur relativ langsam abnimmt. Eine schnellere und damit bezogen auf einen definierten Zeitraum auch insgesamt größere Reduzierung des Ladedrucks führt zu einer entsprechenden Verringerung des Differenzdrucks zwischen der Hochdruckseite und der Niederdruckseite des Verdichters, was einer Rückströmung von bereits verdichtetem Frischgas durch den Verdichter 18 ebenfalls entgegenwirkt.

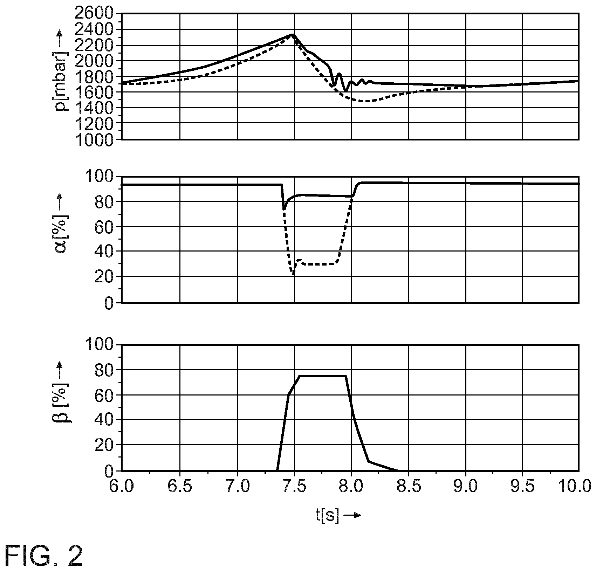

Die Fig. 2 zeigt in insgesamt drei Diagrammen den zeitlichen Verlauf des pneumatischen Ladedrucks p in der Ladeluftstrecke im Bereich der Regelklappe 28 (oben), der relativen Öffnungsweite α der Vorrichtung zur variablen Turbinenanströmung 26 (mittig) sowie der relativen Schließstellung β der Regelklappe 28 für eine beispielhafte Durchführung eines erfindungsgemäßen Verfahrens (jeweils mit durchgezogener Linienführung), bei dem ausgehend von einem Betrieb des Dieselmotors 10 in einem ersten Betriebszustand mit relativ hoher Last (beispielsweise mit oder nahe der Volllast) eine Lastrücknahme bis zu einem Betrieb des Dieselmotors 10 in einem zweiten Betriebszustand mit relativ geringer Last, beispielsweise Leerlauflast, erfolgt. An den relativ kurzen zweiten Betriebszustand schließt sich ein dritter Betriebszustand an, der wiederum durch einen Betrieb des Dieselmotors 10 mit relativ hoher Last gekennzeichnet ist. Ein solcher Lastwechsel im Betrieb des Dieselmotors 10 kann sich infolge eines Schaltvorgangs während eines Beschleunigungsbetriebs eines mittels der Brennkraftmaschine angetriebenen Kraftfahrzeugs einstellen.

In einem ersten zeitlichen Abschnitt ist dementsprechend ein Anstieg des Ladedrucks p erkennbar, bis die Lastrücknahme zu einem deutlichen Abfall des Ladedrucks p führt. Gleichzeitig mit der Lastrücknahme beginnend wird die zuvor weitestmöglich geöffnete Regelklappe 28 erfindungsgemäß bis zu einem Erreichen von maximal ca. 75% bezogen auf ihren Gesamtschließweg (d.h. relative Schließstellung β) geschlossen und erst wieder (vollständig) geöffnet, sobald die erneute relativ hohe Lastanforderung im Betrieb des Dieselmotors 10 gegeben ist.

Ebenfalls gleichzeitig mit der Lastrücknahme beginnend wird zudem die Vorrichtung zur variablen Turbinenanströmung 26, die zuvor zur Erzeugung eines möglichst hohen Ladedrucks weitgehend (ca. 95% bezogen auf die Gesamtöffnungsweite) geschlossen gehalten war, bis zu einer relativen Öffnungsweite α von nur noch ca. 85% gestellt (ein erstes regelungstechnisch bedingtes Einschwingen des Stellungsverlaufs unberücksichtigt) und somit um ca. 10% bezogen auf die Gesamtöffnungsweite weiter als zuvor geöffnet, wodurch die beschriebene Reduzierung der Druckdifferenz zwischen der Hochdruckseite und der Niederdruckseite des Verdichters 18 erreicht werden kann.

In dem oberen und mittleren Diagramm der Fig. 2 ist in gestrichelter Linienführung dargestellt, wie sich der Ladedruck p bei einem vergleichbaren Lastwechsel infolge eines Schaltvorgangs verhalten würde, wenn zur Vermeidung von Kaudern gemäß dem Stand der Technik bei dauerhaft vollständig geöffneter Regelklappe 28 die Stellung der Vorrichtung zur variablen Turbinenanströmung 26 während des zweiten Betriebszustands des Dieselmotors 10, d.h. während des Betriebs mit Leerlauflast, relativ weit, nämlich bis zu einer relativen Öffnungsweite von nur noch ca. 30% gestellt würde. Erkennbar ist, dass dies mit einer deutlich stärkeren Abnahme des Ladedrucks p einhergehen würde. Diese Differenz der Ladedrücke p beim Beginn des erneuten Betriebs des Dieselmotors 10 mit relativ hoher Last bei einerseits der Vorgehensweise gemäß dem Stand der Technik und andererseits bei dem Vorgehen gemäß einem erfindungsgemäßen Verfahren wirkt sich als entsprechend unterschiedliche Ansprechverhalten der Dieselmotoren 10 aus. Dies führt zu einer spürbar besseren Fahrdynamik für den nach dem erfindungsgemäßen Verfahren betriebenen Dieselmotor 10.

### Bezugszeichenliste

- 10: Dieselmotor
- 12: Zylinder
- 14: Ansaugmündung
- 16: Luftfilter
- 18: Verdichter
- 20: Ladeluftkühler
- 22: Turbine
- 24: Welle
- 26: Vorrichtung zur variablen Turbinenanströmung
- 28: Regelklappe
- 30: Injektor
- 32: Steuervorrichtung

## Patentansprüche

1. Verfahren zum Betreiben einer Brennkraftmaschine, die einen Dieselmotor (10) und einen Frischgasstrang, über den dem Dieselmotor (10) Frischgas zuführbar ist, umfasst, wobei ein Verdichter (18) und zwischen dem Dieselmotor (10) und dem Verdichter (18) eine Regelklappe (28) in den Frischgasstrang integriert sind, **dadurch gekennzeichnet, dass** bei einem Übergang von einem ersten Betriebszustand des Dieselmotors (10) mit relativ hoher Last zu einem zweiten Betriebszustand des Dieselmotors (10) mit relativ niedriger Last oder mit Nulllast die Regelklappe (28) nur dann in eine zumindest teilweise geschlossene Stellung gestellt wird, wenn der Lastunterschied zwischen dem ersten Betriebszustand und dem zweiten Betriebszustand mindestens 10% beträgt und der Übergang von dem ersten Betriebszustand zu dem zweiten Betriebszustand innerhalb eines Zeitraums von 0,5 Sekunden erfolgt.

2. Verfahren gemäß Anspruch 1, **dadurch gekennzeichnet, dass** der Übergang von dem ersten Betriebszustand zu dem zweiten Betriebszustand innerhalb eines Zeitraums von 0,1 Sekunden erfolgt.

3. Verfahren gemäß einem der vorhergehenden Ansprüche, **dadurch gekennzeichnet, dass** bei einer Brennkraftmaschine, deren Verdichter (18) Teil eines Abgasturboladers ist, der zusätzlich eine Turbine und eine Vorrichtung zur variablen Turbinenanströmung (26) umfasst, zumindest zeitweise gleichzeitig mit dem Verstellen der Regelklappe (28) die Vorrichtung zur variablen Turbinenanströmung (26) in ihrer Position gehalten oder in eine weiter geöffnete Stellung gestellt wird.

4. Verfahren gemäß Anspruch 3, **dadurch gekennzeichnet, dass** die Vorrichtung zur variablen Turbinenanströmung (26) um maximal 20%, vorzugsweise um maximal 15% und besonders bevorzugt um ca. 10% bezogen auf die Gesamtöffnungsweite in eine weiter geöffnete Stellung gestellt wird.

5. Verfahren gemäß einem der vorhergehenden Ansprüche, **dadurch gekennzeichnet, dass** die Regelklappe (28) um mindestens 50%, vorzugsweise um mindestens 60% und besonders bevorzugt um mindestens 70% bezogen auf den Gesamtschließweg in eine geschlossene Stellung gestellt wird.

6. Verfahren gemäß einem der vorhergehenden Ansprüche, **gekennzeichnet durch** die Anwendung bei einer Brennkraftmaschine ohne Hochdruckabgasrückführungsvorrichtung.

7. Brennkraftmaschine mit einem Dieselmotor (10) und einem Frischgasstrang, über den dem Dieselmotor (10) Frischgas zuführbar ist, wobei ein Verdichter (18) und zwischen dem Dieselmotor (10) und dem Verdichter (18) eine Regelklappe (28) in den Frischgasstrang integriert sind, **gekennzeichnet durch** eine Steuervorrichtung (32), die zur Durchführung eines Verfahrens gemäß einem der vorhergehenden Ansprüche ausgebildet ist.

## Claims

1. Method for operating an internal combustion engine which comprises a diesel engine (10) and comprises a fresh-gas tract via which fresh gas is able to be supplied to the diesel engine (10), wherein integrated into the fresh-gas tract are a compressor (18) and, between the diesel engine (10) and the compressor (18), a regulating flap (28), **characterized in that**, in the event of a transition from a first operating state of the diesel engine (10), with relatively high load, to a second operating state of the diesel engine (10), with relatively low load or with zero load, the regulating flap (28) is moved into an at least partially closed position only if the difference in load between the first operating state and the second operating state is at least 10% and the transition from the first operating state to the second operating state occurs within a time period of 0.5 seconds.

2. Method according to Claim 1, **characterized in that** the transition from the first operating state to the second operating state occurs within a time period of 0.1 seconds.

3. Method according to either of the preceding claims, **characterized in that**, for an internal combustion engine whose compressor (18) is part of an exhaust-gas turbocharger which additionally comprises a turbine and a device for variable turbine inflow (26), the device for variable turbine inflow (26) is, at least temporarily simultaneously with the adjustment of the regulating flap (28), held in its position or moved into a more open position.

4. Method according to Claim 3, **characterized in that** the device for variable turbine inflow (26) is moved into a more open position by at most 20%, preferably by at most 15%, and particularly preferably by approximately 10%, with respect to the total opening width.

5. Method according to one of the preceding claims, **characterized in that** the regulating flap (28) is moved into a closed position by at least 50%, preferably by at least 60%, and particularly preferably by at least 70%, with respect to the total closing travel.

6. Method according to one of the preceding claims, **characterized by** the use for an internal combustion engine without a high-pressure exhaust-gas recirculation device.

7. Internal combustion engine having a diesel engine (10) and having a fresh-gas tract via which fresh gas is able to be supplied to the diesel engine (10), wherein integrated into the fresh-gas tract are a compressor (18) and, between the diesel engine (10) and the compressor (18), a regulating flap (28), **characterized by** a control device (32) which is configured for carrying out a method according to one of the preceding claims.

## Revendications

1. Procédé de fonctionnement d'un moteur à combustion interne comprenant un moteur diesel (10) et un circuit de gaz frais par lequel le moteur diesel (10) peut être alimenté en gaz frais, un compresseur (18) et, entre le moteur diesel (10) et le compresseur (18), un volet de commande (28) étant intégrés dans le circuit de gaz frais, **caractérisé en ce que** lors du passage d'un premier état de fonctionnement du moteur diesel (10) avec une charge relativement élevée à un deuxième état de fonctionnement du moteur diesel (10) avec une charge relativement faible ou une charge nulle, le volet de commande (28) n'est placé dans une position au moins partiellement fermée que lorsque la différence de charge entre le premier état de fonctionnement et le deuxième état de fonctionnement est d'au moins 10 % et le passage du premier état de fonctionnement au deuxième état de fonctionnement est effectué dans un délai de 0,5 seconde.

2. Procédé selon la revendication 1, **caractérisé en ce que** le passage du premier état de fonctionnement au deuxième état de fonctionnement est effectué dans un délai de 0,1 seconde.

3. Procédé selon l'une des revendications précédentes, **caractérisé en ce que**, dans un moteur à combustion interne dont le compresseur (18) fait partie d'un turbocompresseur à gaz d'échappement qui comprend en outre une turbine et un dispositif d'entrée de turbine variable (26), le dispositif d'entrée de turbine variable (26) est maintenu dans sa position ou placé dans une position davantage ouverte au moins temporairement au moment du réglage du volet de commande (28).

4. Procédé selon la revendication 3, **caractérisé en ce que** le dispositif d'entrée de turbine variable (26) est placé dans une position davantage ouverte à un maximum de 20 %, de préférence à un maximum de 15 % et plus préférablement à environ 10 % de la largeur totale d'ouverture.

5. Procédé selon l'une des revendications précédentes, **caractérisé en ce que** le volet de commande (28) est placé dans une position fermée à au moins 50 %, de préférence à au moins 60 % et de manière particulièrement préférée à au moins 70 % du chemin de fermeture totale.

6. Procédé selon l'une des revendications précédentes, **caractérisé par** l'utilisation dans un moteur à combustion interne sans dispositif de recyclage des gaz d'échappement à haute pression.

7. Moteur à combustion interne comprenant un moteur diesel (10) et un circuit de gaz frais permettant d'alimenter le moteur diesel (10) en gaz frais, un compresseur (18) et, entre le moteur diesel (10) et le compresseur (18), un volet de commande (28) étant intégrés dans le circuit de gaz frais, **caractérisé par** un dispositif de commande (32) conçu pour mettre en oeuvre un procédé selon l'une des revendications précédentes.
